# FASCICULE DE BREVET EUROPEEN

(11) **EP 2 587 691 B1**
(45) Date de publication et mention de la délivrance du brevet: **09.01.2019**
(21) Numéro de dépôt: 12189684.9
(22) Date de dépôt: 24.10.2012
(51) Int. Cl.: H04B 7/185, G01S 1/68, G01S 5/12

(54) **Procédé de traitement coordonné de signaux émis par des balises**
Koordiniertes Verarbeitungsverfahren von Signalen, die von Baken ausgesendet werden
Method for the coordinated processing of signals transmitted by beacons

(30) Priorité: 26.10.2011 FR 1103284
(43) Date de publication de la demande: 01.05.2013
(73) Titulaire: Thales, 92400 Courbevoie (FR); Centre National d'Etudes Spatiales, 75039 Paris Cedex 01 (FR)
(72) Inventeur: Calmettes, Thibaud, 31400 Toulouse (FR); Monnerat, Michel, 31240 Saint Jean (FR); Ries, Lionel, 81290 Viviers Les Montagnes (FR)
(74) Mandataire: Priori, Enrico

(56) Documents cités:
- EP-A1- 1 033 582
- WO-A2-01/48941
- US-A- 5 233 626
- US-A- 5 796 760
- US-B1- 6 317 077
- LEWANDOWSKI A ET AL: "Performance Evaluation of Satellite-Based Search and Rescue Services: Galileo vs. Cospas-Sarsat", VEHICULAR TECHNOLOGY CONFERENCE, 2008. VTC 2008-FALL. IEEE 68TH, IEEE, PISCATAWAY, NJ, USA, 21 septembre 2008 (2008-09-21), pages 1-5, XP031352252, ISBN: 978-1-4244-1721-6
- C. FERNÁNDEZ PRADES: "Advanced Signal Processing Techniques in Local User Terminals for Search & Rescue Systems Based on MEO Satellites", PROCEEDINGS OF ION-GNSS 2005, 13 septembre 2005 (2005-09-13), pages 579-585, XP055004019,

## Description

La présente invention concerne un procédé de traitement de signaux émis par des balises reçues par différents sous-éléments indépendants d'un module de collecte. Elle s'applique notamment à la localisation précise et fiable de balises de détresse par un système satellitaire.

Un système de localisation de balises de détresse connu est le système MEOSAR, sigle anglo-saxon pour « Middle Earth Orbit Search and Rescue », lequel est un système satellitaire à orbite de hauteur moyenne pour la recherche et le sauvetage. Celui-ci comprend :
▪ des balises émettrices de signaux à localiser ;
▪ des satellites relais en orbite moyenne (lesquels peuvent être des satellites utilisés dans un système de géolocalisation et de navigation, système souvent désigné par le sigle GNSS pour « Global Navigation Satellite System ») ;
▪ des modules de traitement au sol indépendants, ou stations, qualifiés parfois également de MEOLUT, acronyme pour « Middle Earth Orbit Local User Terminal » ;
▪ d'un centre de coordination des modules de traitement au sol, qualifié parfois de MTCF, acronyme pour « MEOLUT Tracking Coordination Facility ».

Le centre de coordination des modules de traitement au sol permet d'aider à la programmation des antennes des différents modules afin d'améliorer la couverture et les performances globales du réseau de modules, en particulier lorsque les modules sont équipés de plusieurs antennes (comme le cas de certaines stations MEOLUT).

Une balise de détresse SAR (« Search and Rescue ») est vue simultanément par plusieurs satellites qui captent les signaux qu'elle émet et les retransmettent vers des stations au sol. Ces stations au sol démodulent les messages balises codés dans les signaux, puis mesurent les temps d'arrivée des signaux (TOA pour « Time of Arrivai ») ainsi que le décalage en fréquence que ces signaux (FOA pour « Fréquence of Arrivai ») ont subi par effet Doppler afin de déterminer la position de la balise.

Cependant, le rapport signal à bruit des signaux reçus n'est pas toujours suffisant pour permettre aux stations de les exploiter aux fins de localiser la balise, voire même aux fins de déterminer le contenu de son message. Ainsi, même lorsqu'un nombre suffisant de satellites - généralement, quatre satellites - a pu transmettre des signaux de balise, les TOA et FOA ne peuvent pas être déterminés pour tous ces signaux, ce qui empêche de déterminer la position de la balise.

La dégradation du rapport signal à bruit peut être de nature hétérogène, et causée notamment par l'environnement de la balise à l'émission, par la propagation atmosphérique, par le satellite-relai utilisé, et par l'environnement de la station MEOLUT à la réception.

La publication « Performance évaluation of satellite-based search and rescue services: Galileo vs. Cospas-Sarsat », (Lewandowski et al., Vehicular Technology Conférence, 2008) rappelle l'architecture générale du réseau mettant en oeuvre le service « Search and Rescue », à l'aide des systèmes Cospas-Sarsat et Galileo SAR.

La publication US5233626 divulgue quant à elle un procédé d'optimisation de la démodulation d'un signal au niveau d'un récepteur, qui effectue un traitement de réduction de la profondeur d'évanouissement d'un signal émis par une balise terrestre et passant par une pluralité de répéteurs.

Un but de l'invention est de proposer des moyens pour détecter des signaux émis par une balise de manière plus fiable et plus précise qu'avec les systèmes connus. A cet effet, l'invention a pour objet un procédé de démodulation d'un signal portant un message émis par une balise terrestre, exécuté par un système comprenant une constellation de satellites aptes à détecter ledit signal et à le répéter vers des stations de réception au sol, et un module d'analyse apte à recevoir des signaux desdites stations, le procédé étant caractérisé en ce que chaque station de réception transmet les signaux qu'elle reçoit du satellite vers le module d'analyse, ledit module recalant en fréquence et/ou en temps lesdits signaux les uns par rapport aux autres, combinant les signaux recalés pour générer un signal synthétique ayant un rapport signal à bruit amélioré, et déterminant le contenu dudit message et/ou les paramètres de modulation dudit signal synthétique.

Selon une mise en oeuvre du procédé de démodulation selon l'invention, le signal émis par la balise débute par une porteuse pure, l'étape de recalage des signaux entre eux comprenant une phase de recherche de cette porteuse pure en recherchant l'écart fréquentiel entre les signaux reçus par les stations pour lequel le résultat d'une corrélation entre lesdits signaux se rapproche le plus d'un signal de porteuse pure.

Selon une mise en oeuvre du procédé de démodulation selon l'invention, le signal comprend un mot de synchronisation, l'étape de recalage des signaux entre eux comprenant une phase de recherche des écarts temporels et fréquentiels des signaux entre eux en effectuant un calcul de corrélation sur le mot de synchronisation.

Selon une mise en oeuvre du procédé de démodulation selon l'invention, on génère un signal de réplique à partir des paramètres de modulation déterminés, et on compare ledit signal de réplique avec les signaux reçus par les stations au sol afin de déterminer les mesures de date et fréquence d'arrivée du signal.

Selon une mise en oeuvre du procédé de démodulation selon l'invention, le module d'analyse diffuse à au moins une station la réplique optimale générée.

Selon une mise en oeuvre du procédé de démodulation selon l'invention, au moins une station de réception reçoit un signal transmis par un même satellite via plusieurs voies d'antenne différentes, la station de réception sélectionnant parmi lesdites voies le signal pourvu du meilleur rapport signal à bruit avant de le transmettre au module d'analyse.

Selon une mise en oeuvre du procédé de démodulation selon l'invention, le module d'analyse diffuse à au moins une station des paramètres caractéristiques du signal balise (contenu binaire, indice de modulation, rythme bit, temps de montée des bits, modèle de la phase du bit) au lieu du signal complet.

L'invention a également pour objet un procédé de localisation d'une balise terrestre émettrice de signaux, on exécute les étapes du procédé de démodulation tel que décrit plus haut, le procédé de localisation comprenant également une étape d'exploitation desdits paramètres pour déterminer la localisation de la balise.

L'invention a également pour objet un système de localisation d'une balise émettrice d'un signal émis par une balise terrestre, caractérisé en ce qu'il comprend un module d'analyse apte à exécuter les étapes du procédé de localisation susmentionné.

Selon un mode de réalisation du système de localisation selon l'invention, le système comprend des moyens de coordination des stations aptes à programmer et à coordonner des orientations des antennes des modules, et le module d'analyse est colocalisé avec lesdits moyens de coordination, le module d'analyse étant configuré pour partager les mêmes antennes de transmission vers les stations de réception que les moyens de coordination. Ce mode de réalisation permet de réduire les moyens de transmission utilisés pour communiquer avec les modules de réception. Le centre de coordination est parfois désigné par le sigle anglo-saxon « MTCF », pour « MEOLUT Tracking Coordination Facility ».

Selon un autre mode de réalisation du système de localisation selon l'invention, le système comprend des moyens de communication entre les stations, et le module d'analyse est colocalisé avec une desdites stations.

Selon un autre mode de réalisation du système de localisation selon l'invention, le système comprend des moyens de communication entre les stations, et un module d'analyse est colocalisé dans chacune desdites stations.

D'autres caractéristiques apparaîtront à la lecture de la description détaillée donnée à titre d'exemple et non limitative qui suit faite en regard de dessins annexés qui représentent :
- la figure 1, une illustration d'un système selon l'invention ;
- la figure 2, un schéma illustrant les étapes d'un procédé selon l'invention.

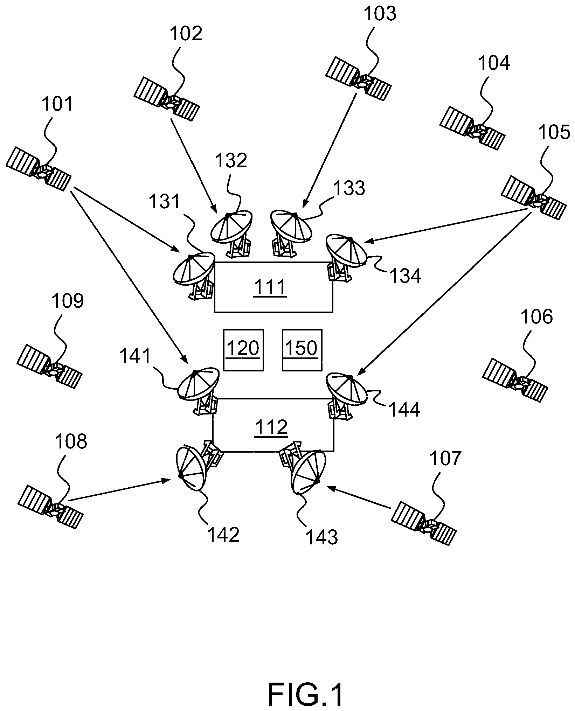

La figure 1 illustre un système selon l'invention. Le système 100 comprend une constellation de satellites 101, 102, 103, 104, 105, 106, 107, 108 évoluant en orbite de moyenne altitude (de l'ordre de 22000 km d'altitude), de stations 111, 112 de réception réparties à différents points de la surface terrestre - dans l'exemple, des stations MEOLUT pour « Middle Earth Orbit Local User Terminal ») et un centre de coordination 120 des stations. En outre, contrairement aux systèmes de l'art antérieur, le système selon l'invention comporte un module d'analyse 150.

Lorsqu'une balise au sol, par exemple une balise de type SAR (Search and Rescue) émet des signaux, ceux-ci sont reçus par des satellites de la constellation qui agissent comme des transpondeurs en retransmettant les signaux reçus vers le sol. A titre d'exemple, une balise SAR se présente sous la forme d'un boîtier émettant un signal périodique toutes les 50 secondes sur une porteuse de fréquence approximativement égale à 406 MHz.

Chaque station de réception 111, 112 au sol comprend une ou plusieurs antennes 131, 132, 133, 134, 141, 142, 143, 144 qui sont configurées pour capter des signaux transmis par les satellites de la constellation qui, à un instant donné, sont dans le champ de visibilité de la station. Ainsi, les signaux issus de la balise au sol sont transmis aux stations 111, 112 par l'intermédiaire des satellites de la constellation. Préférablement, au moins quatre satellites ayant reçu les signaux émis par la balise sont dans le champ de visibilité d'une même station 111, 112, de sorte que des mesures de localisation de la balise peuvent être effectuées en exploitant les temps d'arrivée des signaux ainsi que le décalage en fréquence Doppler subi par le signal.

Dans l'exemple de la figure 1, si une balise est vue par le premier satellite 101, le deuxième satellite 102, le troisième satellite 103 et le cinquième satellite 105, cette balise peut être localisée par la première station 111. De même, si la balise est vue par le premier satellite 101, le cinquième satellite 105, le septième satellite 107 et le huitième satellite 108, cette balise peut être localisée par la deuxième station 112.

Le centre de coordination 120 permet de configurer les antennes des stations 111, 112 de manière à optimiser les chances de réception des signaux de balise sur ces stations 111, 112. Pour transmettre des commandes aux stations 111, 112, ce centre de coordination 120 comprend également des moyens de communications lui permettant de communiquer avec les stations 111, 112.

Le module d'analyse 150 comprend des moyens de calculs non représentés sur la figure et des moyens de communications avec les stations 111, 112, également non représentés. Le module d'analyse 150 est apte à recevoir des signaux et à transmettre des signaux vers les stations 111, 112. Il joue un rôle central dans la mise en oeuvre du procédé selon l'invention car il permet, à partir de plusieurs signaux de balise reçus par les stations 111, 112, de combiner ces signaux afin de produire un modèle précis du signal émis par la balise. Avantageusement, le module d'analyse 150 partage les moyens de communications tels que les antennes avec le centre de coordination 120, de manière à diminuer le volume d'équipements nécessaires à la mise en oeuvre du procédé selon l'invention.

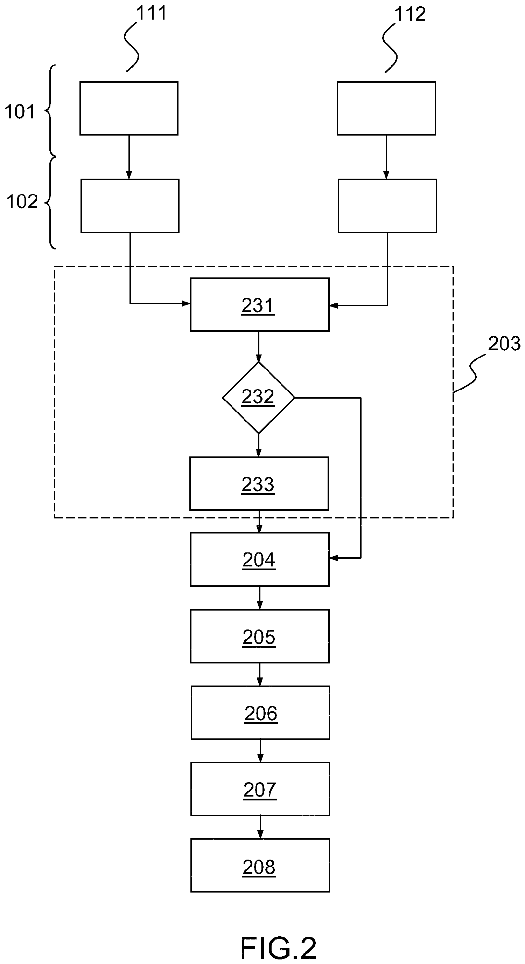

La figure 2 illustre les étapes d'un procédé selon l'invention. Dans un premier temps 201, les signaux de la balise issus des différents satellites 101, 102, 103, 104, 105, 106, 107, 108 jouant le rôle de relai sont détectés par la ou les stations 111, 112.

Chacun des signaux est affecté d'un décalage temporel propre dépendant notamment de la distance entre la station 111, 112 qui l'a reçu et le satellite qui l'a transmis, ainsi que d'un décalage fréquentiel, appelé aussi écart Doppler, qui dépend notamment de la vitesse de déplacement du satellite ayant transmis le signal relativement à la station 111, 112 qui l'a reçu. La position des satellites relais et la position des stations 111, 112 étant connues, ces retards et décalage fréquentiels sont connus. Cependant, les retards et décalages fréquentiels apparus de même sur le trajet montant entre la balise et le satellite ne sont pas connus puisque la position de la balise n'est pas connue.

Dans un deuxième temps 202, ces stations 111, 112 corrigent le signal du retard et du décalage Doppler créés par la voie descendante pour reconstituer un signal tel qu'il a été reçu à bord du satellite, avec uniquement les décalages dus à la voie montante. Ces stations transmettent ensuite ces signaux vers le module d'analyse 150.

Dans un troisième temps 203, le module d'analyse 150 recale les signaux entre eux.

A titre d'exemple, la forme d'onde du signal choisi est celle des signaux émis par une balise SAR. Ce type de signal débute par un signal en forme de fréquence pure qui est suivi par un mot de synchronisation, lequel est suivi par le contenu du message porté par le signal. Selon une première étape 231 de recalage, la fréquence pure du signal émis est recherchée en corrélant les signaux reçus entre eux, dans le domaine de recherche des décalages de fréquence. L'écart fréquentiel correspondant à la corrélation pour laquelle une fréquence pure apparaît le plus nettement indique quelle est la différence de Doppler entre les signaux.

L'addition des signaux retransmis par plusieurs satellites et/ou plusieurs stations permet de réduire le bruit dans la mesure où ceux-ci sont en effet au moins partiellement indépendants. En effet, si le satellite intermédiaire est différent, la direction d'émission et la propagation atmosphérique montante sont différentes, et donc décorrélées ; si le satellite est identique mais la station de réception différente, la même décorrélation va cette fois apparaître lors de la phase descendante du signal. Si à la fois le satellite et la station sont différents, ces deux gains s'additionnent.

Un test 232 est ensuite exécuté pour estimer si la méthode précitée a permis de déterminer de manière fiable la fréquence pure utilisée dans le signal émis par la balise. Par exemple, si le niveau du pic de corrélation est inférieur à un seuil prédéterminé, il est considéré que l'écart fréquentiel entre les signaux n'a pas pu être déterminé. Si cette fréquence pure n'a pas pu être déterminée, une deuxième étape 233 est exécutée pour rechercher les écarts temporels et fréquentiels entre les signaux à partir du mot de synchronisation. A l'issue de cette étape 233, les écarts temporels et fréquentiels des signaux entre eux sont déterminés, de sorte qu'il devient possible de les recaler.

Dans un quatrième temps 204, les signaux recalés sont sommés de manière cohérente en temps et en fréquence pour produire un signal résultant dont le rapport signal à bruit est augmenté. Selon une mise en oeuvre du procédé selon l'invention, seule la partie correspondant au contenu du message porté par le signal est prise en compte dans cette étape de sommation (notamment, en ne prenant pas en compte le mot de synchronisation). A l'issue de cette étape, on dispose ainsi d'un signal portant un message, dont le rapport signal à bruit est augmenté.

Dans un cinquième temps 205, le signal résultant précité est démodulé, ou au moins ses paramètres de modulation sont déterminés, ces paramètres étant par exemple le temps de montée des bits (ou plus généralement leur forme caractéristique), l'indice de modulation et le rythme bit.

Dans un sixième temps 206, une réplique du signal démodulé est générée. Cette réplique est une forme proche du signal émis par la balise ; dans l'idéal, elle correspond à la forme exacte du signal émis par la balise.

Dans un septième temps 207, la réplique du signal démodulé est comparée aux signaux reçus par les stations 111, 112, de manière à déterminer par corrélation (early-late) le temps d'arrivée (ou TOA pour « Time of Arrivai ») et le décalage en fréquence (ou FOA pour « Frequency of Arrivai ») des signaux reçus sur chacune des stations, pour chaque satellite dans le champ de visibilité de cette station. Ainsi, à l'issue de cette étape, on obtient un couple (TOA, FOA) par couple (station, satellite visible).

Dans un huitième temps 208, les temps d'arrivée précités, ainsi que les décalages Doppler sont exploités pour déterminer la position de la balise, selon des techniques connues de l'homme de l'art.

Selon l'exemple de procédé décrit en figure 2, l'ensemble des étapes à partir de l'étape de recalage 203 est effectuée dans le module d'analyse 150. Selon une autre mise en oeuvre du procédé selon l'invention, les traitements peuvent être répartis différemment entre le module d'analyse 150 et les stations. En particulier, si une première station 111 a réussi à démoduler le signal sans avoir besoin de l'étape 203 du module d'analyse 150, le signal peut tout de même être transmis au module d'analyse 150 qui, en lui ajoutant le signal correspondant reçu d'une deuxième station 112, obtiendra une réplique de meilleure qualité et pourra donc obtenir une meilleure précision lors des étapes suivantes.

De même, selon une mise en oeuvre du procédé selon l'invention, on peut, afin de minimiser la bande passante, faire en sorte que les stations ne transmettent plus des signaux au module d'analyse, mais uniquement des paramètres - message démodulé ou caractéristiques de la réplique - caractéristiques de la modulation, rythme bit, indice, modèle de la phase (par exemple sous la forme d'une suite d'échantillons de phase, ou d'un polynôme caractéristique tel que Fourier, Tchebychev, Lagrange). Dans ce cas, la station établit d'après les paramètres reçus de plusieurs stations un jeu de paramètres idéal permettant aux stations de reconstruire elles-mêmes la réplique à partir de ces paramètres.

Il est à noter qu'une même station 111, 112 peut recevoir les mêmes signaux issus d'un même satellite sur plusieurs antennes différentes, si ces antennes sont configurées (par exemple correctement orientées) pour pouvoir capter des signaux de ce satellite. Dans ce cas, une sélection du signal ayant le meilleur rapport signal à bruit pour construire la réplique est avantageusement effectuée.

Selon une mise en oeuvre du procédé selon l'invention, le traitement peut être également différencié selon les stations 111, 112. Par exemple, dans le cas où le module d'analyse 150 est en lien étroit avec deux stations 111, 112, (c'est-à-dire connectés avec une liaison permettant d'échanger des signaux), mais en lien moins étroit avec une troisième station (non représentée) (c'est-à-dire connectés avec une liaison ne permettant d'échanger que des paramètres), il peut transmettre à cette troisième station les paramètres de la réplique obtenue grâce aux mesures sur les deux premières stations 111, 112 (ou au moins de la meilleure des répliques obtenue sur les deux premières stations).

Selon une mise en oeuvre du procédé selon l'invention, le module d'analyse 150 est intégré directement à une des stations de réception 111, 112, ou à chacune des stations 111, 112, de sorte que chaque station 111, 112 peut mettre en oeuvre les étapes 203 à 208 décrites plus haut en combinant les signaux qu'elle a reçus elle-même avec les signaux reçus par les autres stations qu'elles lui ont retransmis.

Le procédé selon l'invention permet d'améliorer la détection et de rendre plus précise la localisation de balises telles que les balises SAR (« Search And Rescue ») grâce aux traitements réalisés par un module d'analyse recueillant les signaux reçus par plusieurs stations, notamment en utilisant la redondance de signaux obtenue par la visibilité d'une même balise par plusieurs stations de réception au sol.

Le système selon l'invention présente plusieurs avantages. Dans un système selon l'art antérieur, si le rapport signal à bruit sur les stations est insuffisant, la balise n'est localisée par aucune station alors qu'avec le système selon l'invention, il est possible en combinant les répliques de réussir tout de même une détection. D'autre part, quelle que soit la solution ayant permis la détection (que l'on exécute un traitement individuel dans la station ou un traitement par combinaison), la combinaison des signaux permet de toute manière d'améliorer la qualité des répliques des signaux et la qualité des mesures de TOA et FOA, et donc la localisation.

## Revendications

1. Procédé de démodulation d'un signal portant un message émis par une balise terrestre, exécuté par un système comprenant une constellation de satellites (101, 102, 103, 104, 105, 106, 107, 108) aptes à détecter ledit signal et à le répéter vers **une pluralité de** stations de réception au sol (111, 112), et un module d'analyse (150) apte à recevoir des signaux desdites stations (111, 112), le procédé étant **caractérisé en ce que** chaque station de réception (111, 112) transmet (202) les signaux qu'elle reçoit **d'au mois un** satellite vers le module d'analyse (150), ledit module (150) recalant (203) en fréquence et/ou en temps lesdits signaux les uns par rapport aux autres, combinant (204) les signaux recalés pour générer un signal synthétique ayant un rapport signal à bruit amélioré, et déterminant le contenu dudit message et/ou les paramètres de modulation dudit signal synthétique (205).

2. Procédé de démodulation selon la revendication 1, dans lequel le signal émis par la balise débute par une porteuse pure, l'étape de recalage (203) des signaux entre eux comprenant une phase (231) de recherche de cette porteuse pure en recherchant l'écart fréquentiel entre les signaux reçus par les stations (111, 112) pour lequel le résultat d'une corrélation entre lesdits signaux se rapproche le plus d'un signal de porteuse pure.

3. Procédé de démodulation selon la revendication 1 ou 2, dans lequel le signal comprend un mot de synchronisation, l'étape de recalage (203) des signaux entre eux comprenant une phase de recherche (232) des écarts temporels et fréquentiels des signaux entre eux en effectuant un calcul de corrélation sur le mot de synchronisation.

4. Procédé de démodulation selon l'une quelconque des revendications précédentes, dans lequel on génère (206) un signal de réplique à partir des paramètres de modulation déterminés (205), et dans lequel on compare ledit signal de réplique avec les signaux reçus par les stations au sol (111, 112) afin de déterminer les mesures de date et fréquence d'arrivée du signal.

5. Procédé de démodulation selon la revendication 4, dans lequel le module d'analyse (150) diffuse à au moins une station (111, 112) la réplique optimale générée.

6. Procédé de démodulation selon l'une quelconque des revendications précédentes, dans lequel au moins une station de réception (111, 112) reçoit un signal transmis par un même satellite via plusieurs voies d'antenne différentes, la station de réception (111, 112) sélectionnant parmi lesdites voies le signal pourvu du meilleur rapport signal à bruit avant de le transmettre au module d'analyse (150).

7. Procédé de démodulation selon l'une des revendications 1 à 5, dans lequel le module d'analyse (150) diffuse à au moins une station des paramètres caractéristiques du signal balise parmi lesquels le contenu binaire, l'indice de modulation, le rythme bit, le temps de montée des bits, le modèle de la phase du bit, au lieu du signal complet.

8. Procédé de localisation d'une balise terrestre émettrice de signaux, dans lequel on exécute les étapes du procédé de démodulation selon l'une quelconque des revendications précédentes, le procédé comprenant une étape d'exploitation desdits paramètres pour déterminer la localisation de la balise.

9. Système de localisation d'une balise émettrice d'un signal émis par une balise terrestre, **caractérisé en ce qu'**il comprend un module d'analyse (150) apte à exécuter les étapes du procédé de localisation selon la revendication 8.

10. Système de localisation selon la revendication 9, le système comprenant des moyens de coordination (120) des stations (111, 112) aptes à programmer et à coordonner des orientations des antennes des modules (111, 112), dans lequel le module d'analyse (150) est colocalisé avec lesdits moyens de coordination (120), le module d'analyse (150) étant configuré pour partager les mêmes antennes de transmission vers les stations de réception (111, 112) que les moyens de coordination (120).

11. Système de localisation selon la revendication 9, le système comprenant des moyens de communication entre les stations (111, 112), dans lequel le module d'analyse (150) est colocalisé avec une desdites stations.

12. Système de localisation selon la revendication 9, le système comprenant des moyens de communication entre les stations (111, 112), dans lequel un module d'analyse (150) est colocalisé dans chacune desdites stations.

## Patentansprüche

1. Demodulationsverfahren eines Signals, welches eine durch eine Bake am Boden gesendete Mitteilung trägt, ausgeführt durch ein System, welches eine Konstellation von Satelliten (101, 102, 103, 104, 105, 106, 107, 108) beinhaltet, welche in der Lage sind, das Signal zu erkennen und es an eine Vielzahl von Empfangsstationen am Boden (111, 112) zu wiederholen, und ein Analysemodul (150), welches in der Lage ist, Signale der Stationen (111, 112) zu empfangen, wobei das Verfahren **dadurch gekennzeichnet ist, dass** jede Empfangsstation (111, 112) die von ihr von mindestens einem Satelliten empfangenen Signale an das Analysemodul (150) überträgt (202), wobei das Modul (150) die Signale in Bezug aufeinander in Bezug auf Frequenz und/oder Zeit neu einsteuert (203), die neu eingesteuerten Signale kombiniert (204), um ein synthetisches Signal zu erzeugen, welches ein verbessertes Signal-zu-Rauschen-Verhältnis besitzt, und den Inhalt der Mitteilung und/oder die Modulationsparameter des synthetischen Signals (205) bestimmt.

2. Demodulationsverfahren nach Anspruch 1, bei welchem das durch die Bake gesendete Signal mit einem reinen Träger beginnt, wobei der Schritt des Neueinsteuerns (203) der Signale untereinander eine Phase (231) der Suche nach diesem reinen Träger durch Suche der Frequenzabweichung zwischen den durch die Stationen (111, 112) empfangenen Signalen beinhaltet, für welche das Ergebnis einer Korrelation zwischen den Signalen sich am meisten einem reinen Trägersignal nähert.

3. Demodulationsverfahren nach Anspruch 1 oder 2, bei welchem das Signal ein Synchronisierungswort beinhaltet, wobei der Schritt des Neueinsteuerns (203) der Signale untereinander eine Phase der Suche (232) nach Zeit- und Frequenzabweichungen der Signale untereinander durch Bewerkstelligung einer Korrelationsberechnung am Synchronisierungswort beinhaltet.

4. Demodulationsverfahren nach einem der vorhergehenden Ansprüche, bei welchem man ein Antwortsignal anhand von bestimmten Modulationsparametern (205) erzeugt (206), und bei welchem man das Antwortsignal mit durch die Bodenstationen (111, 112) empfangenen Signalen vergleicht, um die Datums- und Frequenzmesswerte der Signalankunft zu bestimmen.

5. Demodulationsverfahren nach Anspruch 4, bei welchem das Analysemodul (150) an mindestens eine Station (111, 112) die optimale erzeugte Antwort ausstrahlt.

6. Demodulationsverfahren nach einem der vorhergehenden Ansprüche, bei welchem mindestens eine Empfangsstation (111, 112) ein Signal erhält, welches durch einen gleichen Satelliten über mehrere unterschiedliche Antennenkanäle übertragen wird, wobei die Empfangsstation (111, 112) unter den Kanälen dasjenige Signal auswählt, welches das beste Signal-zu-Rauschen-Verhältnis besitzt, bevor sie dieses an das Analysemodul (150) überträgt.

7. Demodulationsverfahren nach einem der Ansprüche 1 bis 5, bei welchem das Analysemodul (150) an mindestens eine Station anstatt des vollständigen Signals charakteristische Parameter des Bakensignals ausstrahlt, darunter den binären Inhalt, den Modulationsindex, die Bitrate, die Bitanstiegszeit, das Bit-Phasenmodell.

8. Lokalisierungsverfahren einer Signale aussendenden Bake am Boden, bei welchem man die Schritte des Demodulationsverfahrens nach einem der vorhergehenden Ansprüche ausführt, wobei das Verfahren einen Schritt des Auswertens der Parameter beinhaltet, um die Lokalisierung der Bake zu bestimmen.

9. Lokalisierungssystem einer Bake, welche ein Signal aussendet, welches durch eine Bake am Boden ausgesendet wird, **dadurch gekennzeichnet, dass** es ein Analysemodul (150) beinhaltet, welches in der Lage ist, die Schritte des Lokalisierungsverfahrens nach Anspruch 8 auszuführen.

10. Lokalisierungssystem nach Anspruch 9, bei welchem das System Koordinationsmittel (120) der Stationen (111, 112) beinhaltet, welche in der Lage sind, Ausrichtungen der Antennen der Module (111, 112) zu programmieren und zu koordinieren, wobei das Analysemodul (150) mit den Koordinationsmitteln (120) kolokalisiert ist, wobei das Analysemodul (150) konfiguriert ist, um die gleichen Übertragungsantennen an die Empfangsstationen (111, 112) wie die Koordinationsmittel (120) zu teilen.

11. Lokalisierungssystem nach Anspruch 9, bei welchem das System Kommunikationsmittel zwischen den Stationen (111, 112) beinhaltet, wobei das Analysemodul (150) mit einer der Stationen kolokalisiert ist.

12. Lokalisierungssystem nach Anspruch 9, bei welchem das System Kommunikationsmittel zwischen den Stationen (111, 112) beinhaltet, wobei ein Analysemodul (150) in jeder der Stationen kolokalisiert ist.

## Claims

1. Method for demodulating a signal carrying a message transmitted by a terrestrial beacon, executed by a system comprising a constellation of satellites (101, 102, 103, 104, 105, 106, 107, 108) suitable for detecting said signal and for repeating it towards a plurality of receiving stations on the ground (111, 112), and an analysis module (150) suitable for receiving signals from said stations (111, 112), the method being **characterized in that** each receiving station (111, 112) transmits (202) the signals that it receives from at least one satellite to the analysis module (150), said module (150) realigning (203) said signals in frequency and/or in time relative to one another, combining (204) the realigned signals to generate a synthetic signal having an enhanced signal-to-noise ratio, and determining the content of said message and/or the modulation parameters of said synthetic signal (205).

2. Demodulation method according to Claim 1, in which the signal transmitted by the beacon begins with a pure carrier, the step of mutually realigning (203) the signals comprising a phase (231) of searching for said pure carrier by searching for the frequency difference between the signals received by the stations (111, 112) for which the result of a correlation between said signals comes closest to a pure carrier signal.

3. Demodulation method according to Claim 1 or 2, in which the signal comprises a synchronization word, the step of mutually realigning (203) the signals comprising a phase of searching (232) for the time and frequency differences of the signals between them by performing a correlation calculation on the synchronization word.

4. Demodulation method according to any one of the preceding claims, in which a replica signal is generated (206) from the determined modulation parameters (205), and in which said replica signal is compared with the signals received by the stations on the ground (111, 112) in order to determine the measurements of time and frequency of arrival of the signal.

5. Demodulation method according to Claim 4, in which the analysis module (150) broadcasts to at least one station (111, 112) the optimum replica generated.

6. Demodulation method according to any one of the preceding claims, in which at least one receiving station (111, 112) receives a signal transmitted by one and the same satellite via a number of different antenna channels, the receiving station (111, 112) selecting from said channels the signal provided with the best signal-to-noise ratio before transmitting it to the analysis module (150).

7. Demodulation method according to one of Claims 1 to 5, in which the analysis module (150) broadcasts to at least one station parameters characteristic of the beacon signal including the binary content, the modulation index, the bit rate, the bit rise time, the bit phase model, instead of the complete signal.

8. Method for locating a signal-transmitting terrestrial beacon, in which the steps of the demodulation method according to any one of the preceding claims are executed, the method comprising a step of analysing said parameters to determine the location of the beacon.

9. System for locating a beacon transmitting a signal transmitted by a terrestrial beacon, wherein said system comprises an analysis module (150) suitable for executing the steps of the location method according to Claim 8.

10. Location system according to Claim 9, the system comprising means for coordinating (120) the stations (111, 112) suitable for programming and coordinating orientations of the antennas of the modules (111, 112) in which the analysis module (150) is colocated with said coordination means (120), the analysis module (150) being configured to share the same antennas for transmitting to the receiving stations (111, 112) as the coordination means (120).

11. Location system according to Claim 9, the system comprising communication means between the stations (111, 112), in which the analysis module (150) is colocated with one of said stations.

12. Location system according to Claim 9, the system comprising communication means between the stations (111, 112), in which an analysis module (150) is colocated in each of said stations.
